# EUROPEAN PATENT APPLICATION

(11) **EP 3 666 136 A1**
(43) Date of publication of application: **17.06.2020**
(21) Application number: 18212107.9
(22) Date of filing: 12.12.2018
(51) Int. Cl.: A47J 31/60, C02F 1/00, C02F 1/28, C02F 1/42

(54) **COFFEE MACHINE FILTERING ELEMENT**

(71) Applicant: Tianjin Tianchuang Best Pure Environmental Science and Technology Co., Ltd., Tianjin (CN)
(72) Inventor: WEI, Enyu, TIANJIN, Tianjin (CN)
(74) Representative: Díaz de Bustamante y Terminel, Isidro

(57) **Abstract**

The present invention relates to a coffee machine filtering element, including a body (1), a flow guiding bracket (2), a water outlet strainer (3), a water outlet port cap (4), an upper cover (5), and a filtering cloth, characterized in that the body (1) is provided therein with a filtering chamber (11) and a water outlet chamber (12), the flow guiding bracket (2) is mounted in the filtering chamber (11), the filtering chamber (11) is mixed with a resin (7) and an activated carbon (8) therein, the water outlet chamber (12) is provided with a water outlet pipe (9), the water outlet pipe (9) is provided therein with the water outlet strainer (3), the water outlet port cap (4) is mounted on one end of the water outlet pipe (9) in the body (1), the upper cover (5) is mounted on one end of the body (1), one side of the filtering chamber (11) is a water inlet end (13), and one side of the water outlet chamber (12) is a water outlet end (14). The present invention adopts four-stage filtration through the setting of the coffee machine filtering element, and a flow guiding structure is added in a cavity of filtering element to control and stabilize the flow rate thereof and stabilize the performance of the filtering element.

## Description

### TECHNICAL FIELD

The invention relates to a coffee machine filtering element.

### TECHNICAL BACKGROUND

At present, the coffee machine filter for water inlet and outlet adopts a structure of which the inner portion is a cavity and which is filled with a filtering material, since there is no a flow guiding structure during the process that the water flows into a water outlet port via the filtering material, and a flow velocity is unstable. Therefore, a flow rate is too high, and then a filtration performance is low, the flow rate is too low, and then water output of the filtering element is too low, which affects experience.

### SUMMARY OF THE PRESENT INVENTION

In order to overcome the deficiencies of the prior art, the present invention provides a coffee machine filtering element.

In order to solve the above problems, the present invention adopts the following technical solution:
A coffee machine filtering element comprises a body, a flow guiding bracket, a water outlet strainer, a water outlet port cap, an upper cover, and a filtering cloth, characterized in that the body is provided therein with a filtering chamber and a water outlet chamber, the flow guiding bracket is mounted in the filtering chamber, the filtering chamber is mixed with a resin and an activated carbon therein, the water outlet chamber is provided with a water outlet pipe, the water outlet pipe is provided therein with the water outlet strainer, the water outlet port cap is mounted on one end of the water outlet pipe in the body, the upper cover is mounted on one end of the body, one side of the filtering chamber is a water inlet end, and one side of the water outlet chamber is a water outlet end.

As a preference, the water outlet end is provided with a water outlet port cap.

As a preference, the outer ring of the water outlet end of the body is provided with an annular groove, and the annular groove is provided therein with a sealing ring.

As a preference, the water inlet end is provided thereon with a square-shaped grid.

As a preference, the upper cover comprises a flat plate and a welding ring, the welding ring is blocked and engaged in the body, the welding ring is welded with the body, laterally and longitudinally staggered reinforcing ribs are provided on the flat plate in the body.

As a preference, the water outlet strainer is provided with a water outlet hole, the water outlet strainer is provided with an annular boss, and the filtering cloth is welded on the annular boss via an ultrasonic wave.

As a preference, the water outlet port cap is provided thereon with a radial-shaped grill.

As a preference, the outer ring of the flow guiding bracket cooperates with the filtering chamber, and the flow guiding bracket is spiral.

As a preference, the flow guiding bracket comprises a connecting rod and a spiral piece, the connecting rod is welded on the water inlet end, the spiral piece is welded on the connecting rod. On the rod, a plurality of arcuate notches is arrayed below the spiral piece, and the arcuate notches are blocked and engaged on the water outlet pipe.

As a preference, the cross-section of the body presents an octagonal barrel structure.

As a preference, the body is provided with two arcuate bosses on the bottom thereof.

As a preference, the body is provided therein with a mounting sleeve and the flow guiding bracket is mounted on the mounting sleeve.

Due to the adoption of the above technical solution, compared with the prior art, the present invention adopts four-stage filtration through the arrangement of the coffee machine filtering element, the activated carbon (placed in the body) adsorbs chlorine and other particulate impurities in the water, and the second stage filtration adopts exchange resin to reduce water hardness, the third stage filtration uses the water outlet strainer to intercept a bulk filtering material to prevent the filtering material from clogging the filtering cloth. The fourth stage filtering cloth intercepts a small granular filtering material and ash content, purified water is discharged through the water outlet pipe connected to the body, and the flow guiding structure is added in the chamber of the filtering element to control the flow rate, and stabilize the flow rate and performance of the filtering element.

The present invention is further described below in conjunction with the drawings and specific embodiments.

### BRIEF DESCRIPTION OF THE DRAWINGS

Figure 1 is a front view of a coffee machine filtering element of the present invention.
Figure 2 is a right side view of a coffee machine filtering element of the present invention.
Figure 3 is a right cross-sectional view of a coffee machine filtering element of the present invention.
Figure 4 is an axial view of a coffee machine filtering element of the present invention.
Figure 5 is a front view of a flow guiding bracket of a coffee machine filtering element of the present invention.
Figure 6 is an axial view of a flow guiding bracket of a coffee machine filtering element of the present invention.
Figure 7 is a partial view of an upper cover of a coffee machine filtering element of the present invention.
Figure 8 is a front view of a water outlet port cap of a coffee machine filtering element of the present invention.
Figure 9 is an axial view of a water outlet port cap of a coffee machine filtering element of the present invention.
Figure 10 is a partial view of a coffee machine filtering element of the present invention.

In the figures: 1, body, 11, filtering chamber, 12, water outlet chamber, 13, water inlet end, 131, square-shaped grid, 14, water outlet end, 141, annular groove, 15, sealing ring, 17, mounting sleeve, 2, flow guiding bracket, 21, connecting rod, 22, spiral piece, 221, arcuate notch, 3, water outlet strainer, 31, water outlet hole, 32, annular boss, 4, water outlet port cap, 5, upper cover, 51, flat plate, 52 , welding ring, 53, reinforcing rib, 6, filtering cloth, 7, resin, 8, activated carbon, 9, water outlet pipe.

### DETAILED DESCRIPTION

### Example:

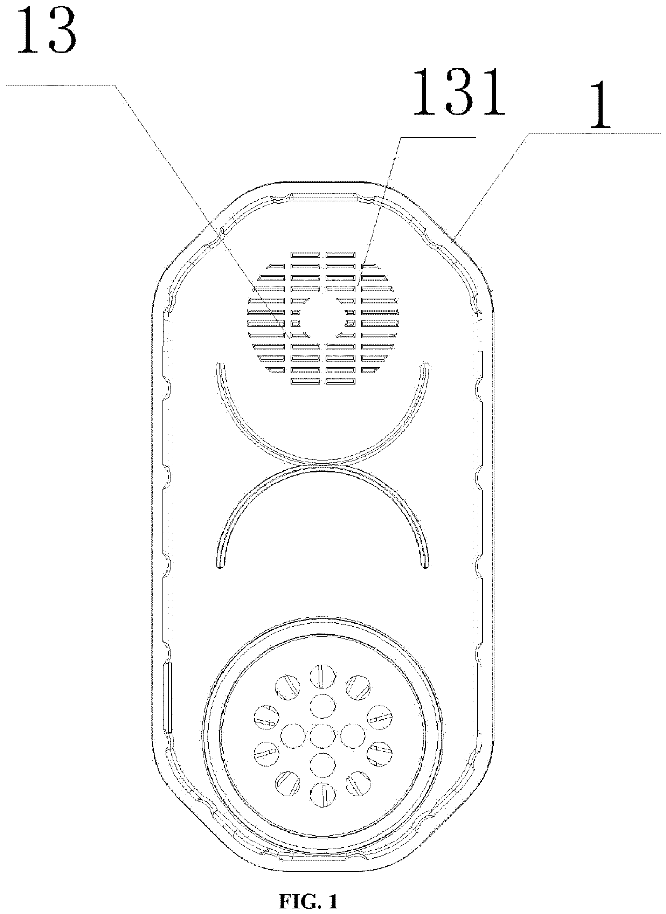

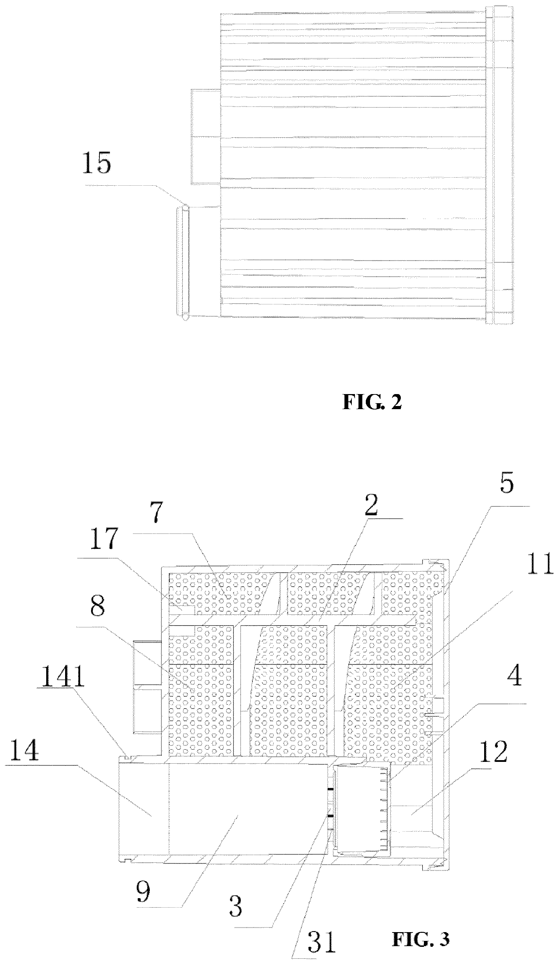

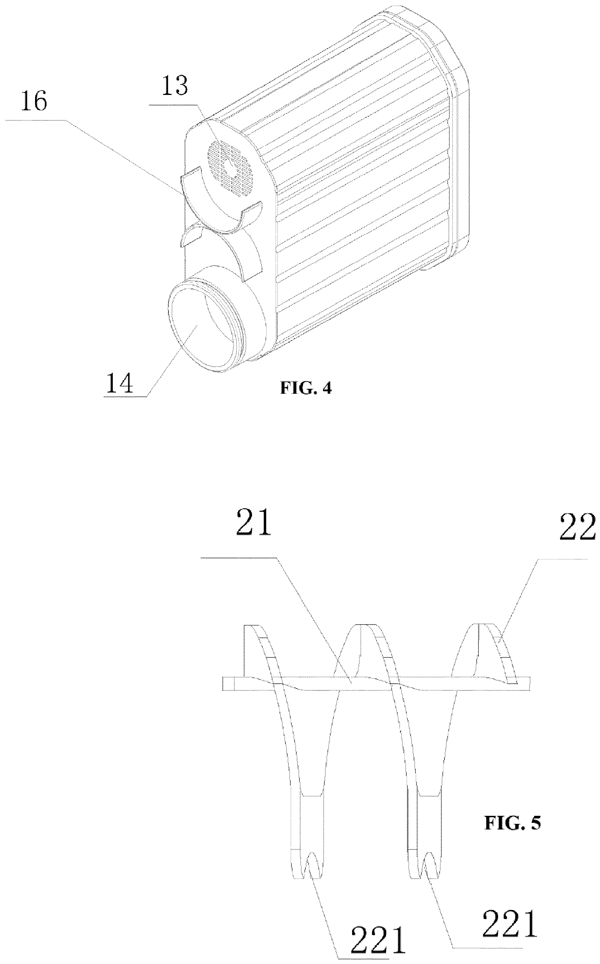

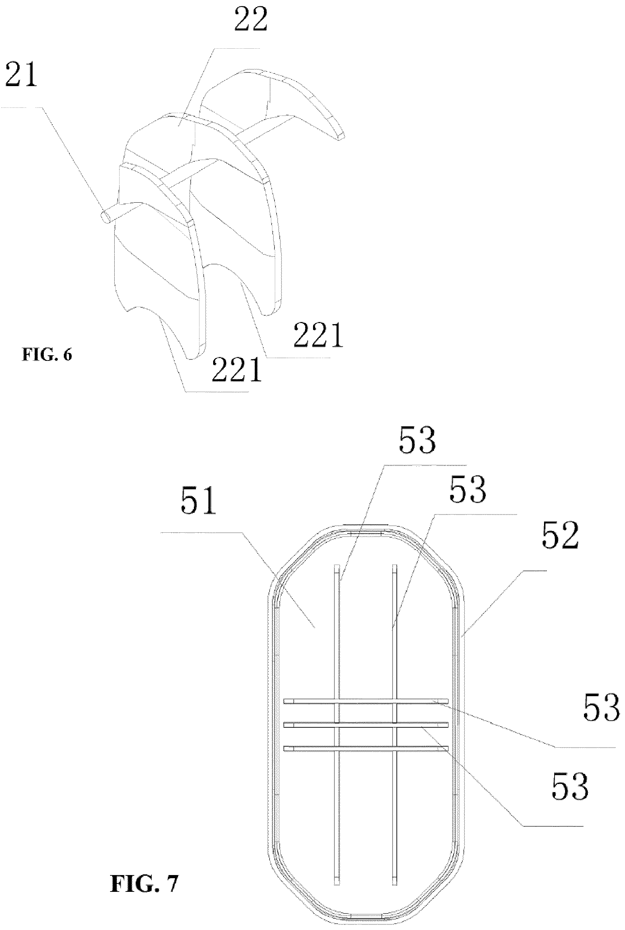

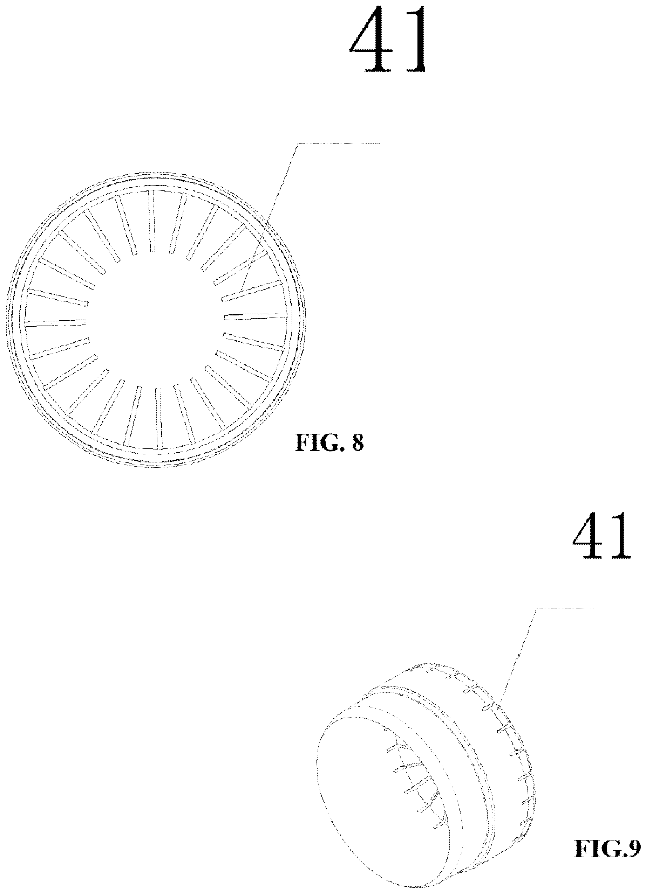

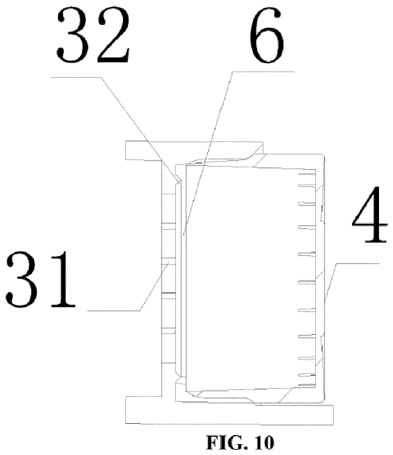

As shown in Figures 1-10, a coffee machine filtering element comprises a body 1, a flow guiding bracket 2, a water outlet strainer 3, a water outlet port cap 4, an upper cover 5, and a filtering cloth 6, characterized in that the body 1 is provided therein with the filtering chamber 11 and the water outlet chamber 12, the flow guiding bracket 2 is mounted in the filtering chamber 11, the filtering chamber 22 is mixed with a resin 7 and an activated carbon 8 therein, the water outlet chamber 12 is provided with a water outlet pipe 9, the water outlet pipe 9 is provided therein with a water outlet strainer 3, the water outlet port cap is mounted on one end of the water outlet pipe 9 in the body 1, the upper cover 5 is mounted at one end of the body 1, one side of the filtering chamber 11 is a water inlet end 13, and one side of the water outlet chamber 12 is a water outlet end 14.

Further, the water outlet end 14 is mounted with the water outlet port cap 4 thereon, and the initial isolation and filtration of the resin 7 and the activated carbon 8 are realized by the arrangement of the water outlet port cap 4. Further, the outer ring of the water outlet end 14 of the body 1 is provided with an annular groove 141, the annular groove 141 is mounted with a sealing ring 15 therein, through the arrangement of the annular groove 141, the installation of the sealing ring 15 is facilitated, the sealing of the water outlet end 14 is realized, the sealing ring is configured to form a sealing area with a water tank cooperatively to prevent the filtering element from being short-circuited, the short-circuited performance causes pre-filtration water and filtered water to be mixed, which causes a decrease in filtration efficiency.

Further, the water inlet end 13 is provided thereon with a square-shaped grid 131, by the arrangement of the square-shaped grid 131, the backflow of the resin and the activated carbon is prevented from contaminating the water inlet pipe.

Further, the upper cover 5 comprises a flat plate 51 and a welding ring 52, the welding ring 52 is blocked and engaged at the body 1, the welding ring 52 is welded with the body 1, the flat plate in the body 1 is The ribs 53 are provided with laterally and longitudinally staggered reinforcing ribs 53 are provided on the flat plate 51 in the body 1, by the arrangement of the reinforcing ribs 53, the strength of the upper cover 5 is improved.

Further, the water outlet strainer 3 is provided with a water outlet hole 31, and the water outlet strainer 3 is provided with an annular boss 32, and the filtering cloth 6 is ultrasonically welded on the annular boss 32 via an ultrasonic wave so that the water outlet hole 31 of the water outlet strainer intercepts the resin 7 and the activated carbon 8 of a bulk filtering material to prevent the resin 7 and the activated carbon 8 from clogging the filtering cloth 6.

Further, the water outlet port cap 4 is provided thereon with a radial-shaped grill 41, the water outlet port cap 4 is arranged as a radial-shaped grill 41, and the filtration of the resin 7 and the activated carbon 8 is also realized.

Further, the outer ring of the flow guiding bracket 2 cooperates with the filtering chamber 11, the flow guiding bracket 2 is spiral, the flow guiding bracket 2 is arranged in a spiral type to realize the function of flow guiding and steady flow.

Further, the flow guiding bracket 2 comprises a connecting rod 21, a spiral piece 22, the connecting rod 21 is mounted on a mounting sleeve 17 at the water inlet end 13, the spiral piece 22 is welded on the connecting rod 21, a plurality of arcuate notches 221 is arrayed below the spiral piece 22, the arcuate notch 221 is blocked and engaged on the water outlet pipe 9, the arrangement of the arcuate notch 221 facilitates the positioning and installation of the flow guiding bracket 2.

Further, the cross-section of the body 1 presents an octagonal barrel structure.

Further, the body 1 is provided with two arcuate bosses 16 on the bottom thereof for supporting and stabilizing the filtering element after the filtering element is mounted in the water tank.

Further, the body 1 is provided therein with the mounting sleeve and the flow guiding bracket is mounted on the mounting sleeve, the installation of the flow guiding bracket is realized via the setting of the mounting sleeve 17.

In the present invention, water flows through the water inlet end 13 and enters the body 1, and then is filtered by the resin 7 and the activated carbon 8, at the same time, the water flow is drained through the spiral piece 22 to achieve the effect of pressure regulation, and then filtered water is sequentially passed through the water outlet port cap 4, the filtering cloth 6 and the water outlet strainer 3, and then discharged from the water discharge end 14 after the resin 7 and the activated carbon 8 are sequentially filtered.

Due to the adoption of the above technical solution, compared with the prior art, the present invention adopts four-stage filtration through the arrangement of the coffee machine filtering element, the activated carbon (placed in the body) adsorbs chlorine and other particulate impurities in the water, and the second stage filtration adopts exchange resin to reduce water hardness, the third stage filtration uses the water outlet strainer to intercept a bulk filtering material to prevent the filtering material from clogging the filtering cloth. The fourth stage filtering cloth intercepts a small granular filtering material and ash content, purified water is discharged through the water outlet pipe connected to the body, and the flow guiding structure is added in the chamber of the filtering element to control the flow rate, and stabilize the flow rate and performance of the filtering element.

The present invention is not limited to the above-described preferred embodiments, those skilled in the art should be aware of the structural changes made under the teachings of the present invention, and any technical solutions being the same or similar as the present invention are within the scope of the present invention.

## Claims

1. A coffee machine filtering element, comprising a body, a flow guiding bracket, a water outlet strainer, a water outlet port cap, an upper cover, and a filtering cloth, **characterized in that** the body is provided therein with a filtering chamber and a water outlet chamber, the flow guiding bracket is mounted in the filtering chamber, the filtering chamber is mixed with a resin and an activated carbon therein, the water outlet chamber is provided with a water outlet pipe, the water outlet pipe is provided therein with the water outlet strainer, the water outlet port cap is mounted on one end of the water outlet pipe in the body, the upper cover is mounted on one end of the body, one side of the filtering chamber is a water inlet end, and one side of the water outlet chamber is a water outlet end.

2. The coffee machine filtering element according to claim 1, **characterized in that** the water outlet end is provided with a water outlet port cap.

3. The coffee machine filtering element according to claim 1, **characterized in that** the outer ring of the water outlet end of the body is provided with an annular groove, and the annular groove is provided therein with a sealing ring.

4. The coffee machine filtering element according to claim 1, **characterized in that** the water inlet end is provided thereon with a square-shaped grid.

5. The coffee machine filtering element according to claim 1, **characterized in that** the upper cover comprises a flat plate and a welding ring, the welding ring is blocked and engaged in the body, the welding ring is welded with the body, laterally and longitudinally staggered reinforcing ribs are provided on the flat plate in the body.

6. The coffee machine filtering element according to claim 1, **characterized in that** the water outlet strainer is provided with a water outlet hole, the water outlet strainer is provided with an annular boss, and the filtering cloth is welded on the annular boss via an ultrasonic wave.

7. The coffee machine filtering element of claim 1, **characterized in that** the water outlet port cap is provided thereon with a radial-shaped grill.

8. The coffee machine filtering element according to claim 1, **characterized in that** the outer ring of the flow guiding bracket cooperates with the filtering chamber, and the flow guiding bracket is spiral.

9. The coffee machine filtering element according to claim 1, **characterized in that** the flow guiding bracket comprises a connecting rod and a spiral piece, the connecting rod is mounting on a mounting sleeve of the water inlet end, the spiral piece is welded on the connecting rod, on the rod, a plurality of arcuate notches is arrayed below the spiral piece, and the arcuate notch is blocked and engaged on the water outlet pipe.

10. The coffee machine filtering element of claim 1, **characterized in that** the cross-section of the body presents an octagonal barrel structure.

11. The coffee machine filtering element according to claim 1, **characterized in that** the body is provided with two arcuate bosses on the bottom thereof.

12. The coffee machine filtering element of claim 1, **characterized in that** the body is provided therein with a mounting sleeve and the flow guiding bracket is mounted on the mounting sleeve.
